# EUROPEAN PATENT APPLICATION

(11) **EP 1 280 051 A1**
(43) Date of publication of application: **29.01.2003**
(21) Application number: 01928200.3
(22) Date of filing: 02.05.2001
(51) Int. Cl.: G06F 9/06

(54) **INFORMATION PROCESSING METHOD AND SYSTEM**

(30) Priority: 04.05.2000 JP 2000172742
(71) Applicant: Access Co., Ltd., Tokyo 101-0064 (JP); The Tokyo Electric Power Co., Inc., Tokyo 100-0011 (JP)
(72) Inventor: KAMADA, Tomihisa, ACCESS CO., LTD., Chiyoda-ku, Tokyo 101-0064 (JP); TOSHIMA, Suguru, ACCESS CO., LTD., Chiyoda-ku, Tokyo 101-0064 (JP); SHIMIZU, Toshihiko, TOKYO ELECTRIC POWER, INC., Chiyoda-ku, Tokyo 100- 0011 (JP); SATO, Hideyuki, TOKYO ELECTRIC POWER, INC., Chiyoda-ku, Tokyo 100-0011 (JP)
(74) Representative: Strehl Schübel-Hopf & Partner
(86) International application number: JP0103796
(87) International publication number: WO01084303

(57) **Abstract**

A kernel (40) operating on a Java virtual machine (33) is provided. When executing a Java application, a single Java virtual machine (33) is activated. On this Java virtual machine 33 that is activated, the kernel (40) obtains information for identifying a Java application (35 or 36), generates an internal process for the application identified by this obtained information, and starts this generated internal process. Then, the kernel (40) serially generates and starts an internal process for each of the plurality of Java applications (35 or 36) to be executed. Thus, the plurality of Java applications are executed on the single Java virtual machine. This reduces the memory amount required for execution of a plurality of Java applications and reduces the processing time before execution starts.

## Description

### TECHNICAL FIELD

The present invention relates to an information processing method and system, and more particularly to an information processing method and system for executing a plurality of Java applications.

### BACKGROUND ART

The Java language, which is used to code Java applications, is an application program development language released by Sun Microsystems Inc. This language has become widely used in a variety of fields, especially in networking or built-in applications, as an object-oriented language featuring the so-called multi-platform capability that allows applications to be executed on any machine (OS).

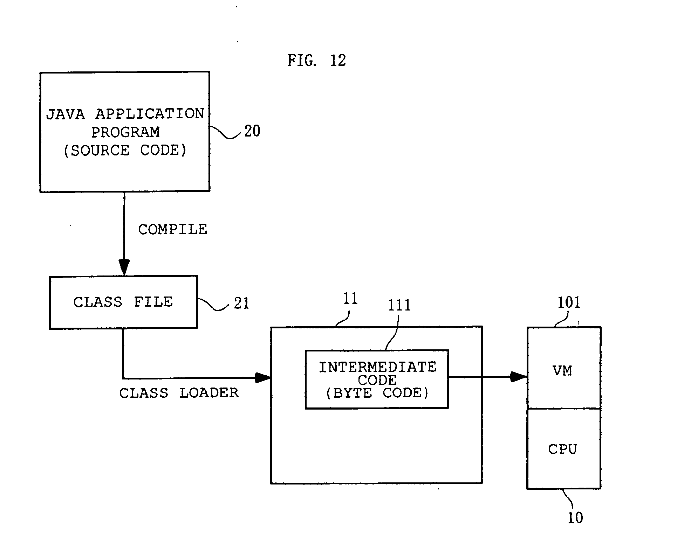

As shown in FIG. 12, the source code of a Java application program 20, coded in the Java language, is compiled into one or more class files 21. This class file 21 comprises intermediate code 111 called byte code. When the application is to be executed, this class file 21 is loaded into a memory 11 for execution on a Java virtual machine (VM) 101. The Java virtual machine 101, *per se*, is a piece of software that runs on a CPU 10. By providing this virtual machine in the CPU 10 (strictly speaking, in the OS), the multi-platform capability described above is implemented.

Conventionally, an attempt to execute a plurality of Java applications at the same time presents the following problems:

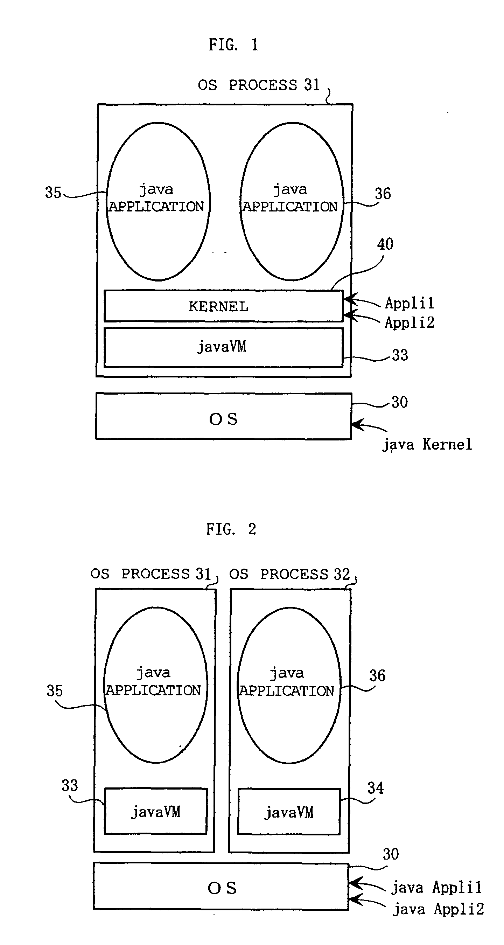

That is, as shown schematically in FIG. 2, when a Java application execution command (for example, java Appli1) is given to an OS 30 of the base machine (computer), the OS 30 recognizes that the command is the execution command of a Java application, generates and activates an OS process 31 and, in that process, generates and activates a first Java VM 33. More specifically, the OS allocates a program area and a data area in the memory for use by the Java VM 33, loads the object code (native code) of the Java VM 33 into the program area and, after performing predetermined initialization, executes the object code of the Java VM 33. Based on the execution command, this Java VM 33 recognizes that the class to be executed is "Appli1", loads the application (class) 35, and executes it.

If, before the application 35 is terminated, a second Java application execution command (for example, java Appli2) is given to the OS 30, the OS 30 generates and activates a Java VM 34 in a second OS process 32, and the second Java VM 34 executes a second Java application 36 as with the first Java application.

As described above, when a plurality of Java applications are executed concurrently in a conventional system, a new Java VM must be activated for each application. Normally, activation of a Java VM requires as many as several M bytes of program area and, depending upon the application, requires as many as several M bytes of data area for the Java VM. Therefore, an attempt to execute a plurality of Java applications results in a large Java VM memory amount with the result that a problem arises especially in fields where the memory capacity is limited. Another problem is that it takes time before starting processing because the Java VM startup time is required each time a new Java application is activated.

In view of the foregoing, it is an object of the present invention to provide an information processing method and apparatus that can reduce the memory amount required when a plurality of Java applications are executed and that can reduce the processing time before execution starts.

### DISCLOSURE OF THE INVENTION

An information processing method according to the present invention is an information processing method for executing a plurality of Java applications on a single Java virtual machine, the information processing method comprising the steps of providing a control module that operates on the Java virtual machine; and activating the single Java virtual machine when a Java application is to be executed, wherein, on the activated Java virtual machine, the control module obtains information for identifying a Java application to be executed; generates an internal process for the application identified by the obtained information; and starts the generated internal process; and, after that, the control module generates and starts another internal process for each of the Java applications to be executed.

Providing the control module that operates on the Java virtual machine eliminates the need for activating the Java virtual machine each time each Java application is executed when a plurality of Java applications are to be executed. As a result, the memory amount required for activating the Java virtual machine is reduced and, at the same time, the startup processing time required for starting a new Java application is reduced.

The step of generating an internal process comprises, for example, the steps of generating a class loader; loading, with the use of the class loader, a start class containing a main method based on the obtained information; and generating a thread group.

The step of starting the internal process comprises, for example, the steps of generating a thread; attaching the generated thread to the thread group; and executing the main method of the loaded start class on the thread.

Preferably, the control module further comprises the step of discarding the started internal process. This allows various processing resources of the terminated internal processes to be released. The step of discarding the internal process comprises, for example, the steps of detecting that, for each internal process, all threads belonging to a thread group have terminated; and, upon detection, discarding management information including the class loader and the thread group of the internal process.

An information processing system according to the present invention is an information processing system for executing a plurality of Java applications on a single Java virtual machine, comprising a control module that operates on the Java virtual machine, wherein the control module comprises means for obtaining information for identifying a Java application to be executed; means for generating an internal process for the application identified by the obtained information; and means for starting the generated internal process, and wherein the control module executes processing of each means concerning the internal process for each of the plurality of Java application programs to be executed.

A computer program according to the present invention or a recording medium recording therein the program is a recording medium recording therein a computer program for implementing an information processing method for executing a plurality of Java applications on a single Java virtual machine, wherein a control module that operates on the Java virtual machine is provided and the control module comprises a function for obtaining information for identifying a Java application to be executed; a function for generating an internal process for the application identified by the obtained information; and a function for starting the generated internal process, and wherein the control module generates and starts another internal process for each of the plurality of Java applications to be executed.

A computer program according to the present invention is a computer program that serves as a control module operating on a Java virtual machine for implementing an information processing method for executing a plurality of Java applications on a single Java virtual machine, the computer program comprising a function for obtaining information for identifying a Java application to be executed; a function for generating an internal process for the application identified by the obtained information; and a function for starting the generated internal process, wherein the internal process is generated and started for each of the plurality of Java applications to be executed.

Another aspect of an information processing method according to the present invention is a method wherein a kernel is provided as a control module that functions on a Java virtual machine generated and activated on an operating system (OS), the method comprising the steps of, when a Java application program is to be executed, giving an execution command of the kernel to the operating system to generate and activate the Java virtual machine; generating and starting the kernel by the Java virtual machine; and, thereafter, serially obtaining, by the kernel, items of information for identifying Java applications to execute a plurality of Java applications on the single Java virtual machine concurrently.

### BRIEF DESCRIPTION OF THE DRAWINGS

FIG. 1 is a system configuration diagram showing the concept of the present invention;
FIG. 2 is a system configuration diagram showing a conventional system for comparison with the system in FIG. 1;
FIG. 3 is a diagram showing name spaces in an embodiment of the present invention;
FIG. 4 is a block diagram showing the major functions executed by a kernel in the embodiment of the present invention;
FIG. 5 is a diagram schematically showing how threads are grouped in the embodiment of the present invention;
FIG. 6 is a diagram showing information identifying Java applications in the embodiment of the present invention;
FIG. 7 is a diagram showing an example of information management by a process management table in the embodiment of the present invention;
FIG. 8 is a flowchart showing an example of operation performed by the kernel in the embodiment of the present invention;
FIG. 9 is a flowchart showing an example of the actual processing of a process generation step S13 in FIG. 7;
FIG. 10 is a flowchart showing an example of the actual processing of a process start step S14 in FIG. 7;
FIG. 11 is a block diagram showing the configuration of a standard computer; and
FIG. 12 is a diagram showing the conventional processing of a Java application program coded in the Java language.

### BEST MODE FOR CARRYING OUT THE INVENTION

A preferred embodiment of the present invention will be described in detail below with reference to the drawings.

Before describing a concrete embodiment of the present invention, the concept of the present invention will be described first with reference to FIG. 1. The system according to the present invention is similar to the conventional system in that a Java VM 33 is generated and activated in an OS process 31 generated in an OS 30 but is different from the conventional system in that a Java software module, called a kernel (control module) 40, is additionally provided above the Java VM 33 in the OS process 31. Providing the kernel 40 allows a plurality of Java applications 35 and 36 to be executed on the single Java VM 33.

That is, when executing the first Java application in the OS 30, an execution command for the kernel 40, for example, "java Kernel", is given to the OS 30. This command causes the OS 30 to generate and activate the Java VM 33. Then, the Java VM 33 generates and activates the kernel 40. Thereafter, the kernel 40 serially acquires items of information for identifying Java applications, and the plurality of Java applications 35 and 36 are executed concurrently on the single Java VM 33.

As described above, the system according to the present invention does not require new Java VMs to be generated and activated when the second and the following Java applications are executed, thus reducing the memory amount and the startup time required for them. Of course, the kernel 40 requires an additional memory, but the required memory is much smaller than that required for a new Java VM. In addition, as compared with the time required for activating a new Java VM, the time required by the kernel 40 to accept a new application is so short that it may be neglected.

In general, in the OS, the execution entity of an application is called a "process". The OS processes 31 and 32 described above are those processes. In contrast, the system according to the present invention provides a process that is internally generated and managed by the kernel 40. This process, which is used in the Java VM, is called an "internal process" and is distinguished from an OS process (or external process) described above. This internal process functions as a unit of executing a Java application.

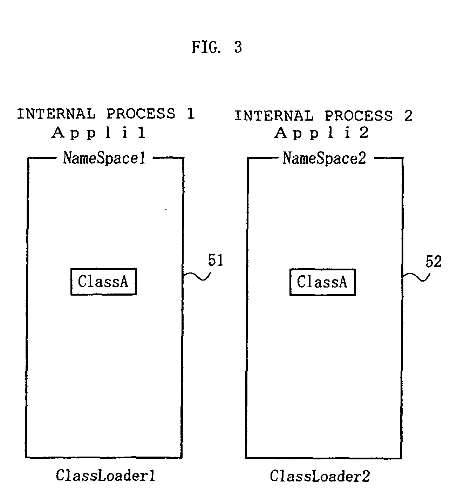

In this embodiment, when the same-name class (Class A) is executed in a plurality of internal processes as shown in FIG. 3, a plurality of class loaders (Classloader1, Classloader2) are used to provide name spaces that are different among internal processes in order to avoid a name conflict. Note that the classes belonging to the kernel 40 and to the core class library (not shown) are implemented to have the name space that are common to the internal processes.

The concept of a name space is known. This concept is used in this embodiment to execute a plurality of Java applications on a single Java VM with no conflict.

Each internal process is executed using a separate thread. (A thread is the execution entity of a method. A method is a program execution definition created by using variables included in the class or using other classes). This. makes it possible to execute the internal processes concurrently. In addition, grouping threads makes it clear to which internal process the threads generated for each Java application belong. Grouping of treads will be described below.

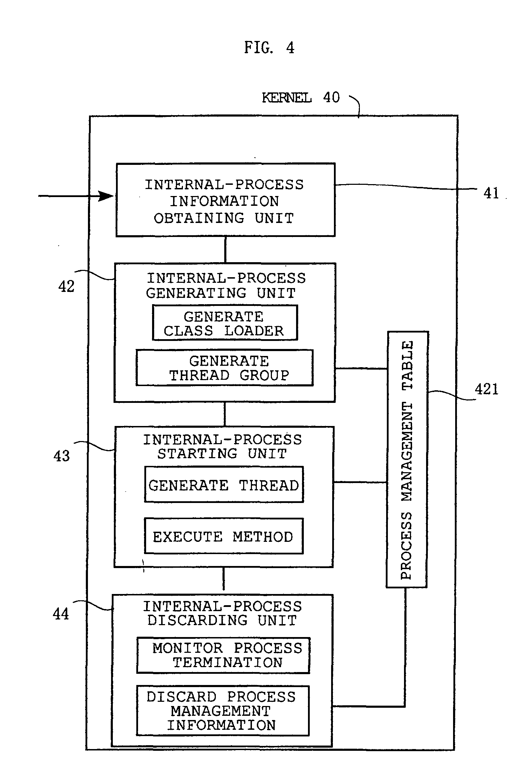

FIG. 4 is a block diagram showing the major functions executed by the kernel 40. As shown in the figure, the kernel 40 comprises an internal-process information obtaining unit 41, an internal-process generating unit 42, an internal-process starting unit 43, and an internal-process discarding unit 44.

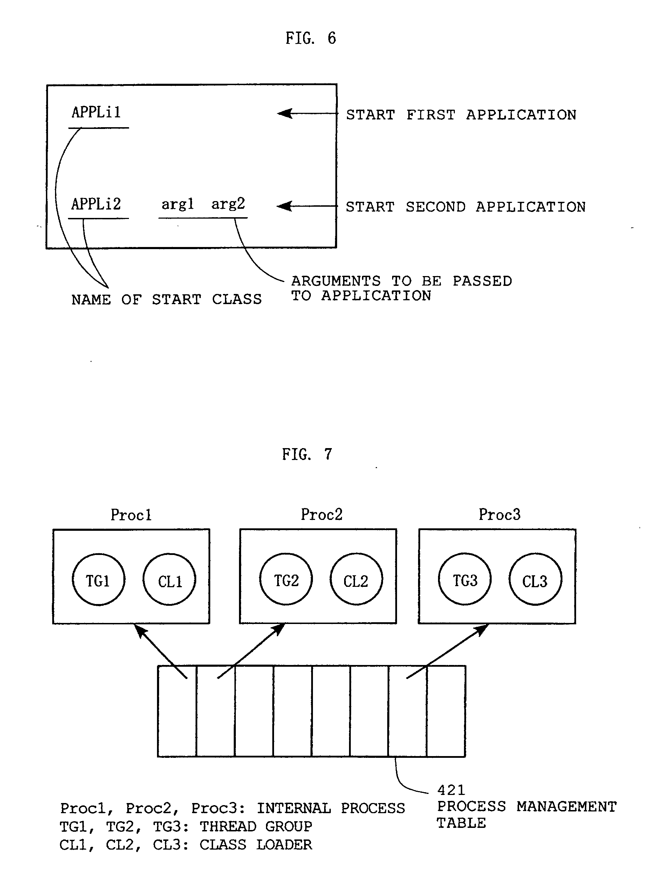

The internal-process information obtaining unit 41 accepts, from an external source, information identifying a Java application to be executed. This information (internal-process information) includes the name of a start class containing the main method or its location (path in the file system or URL). FIG. 6 shows an example in which such information is given as a file. In this example, for starting the first Java application, only the name (Appli1) of the start class of the application is given. For starting the second application, the name (Appli2) of the start class and the arguments (argl arg2) to be passed to the application are given.

Referring back to FIG. 4, the internal-process generating unit 42 of the kernel 40 generates a class loader before executing a new Java application and, with the use of this class loader, loads a class (start class) containing the main method into the above-described separate name space based on the internal-process information. After generating the start class, the kernel 40 generates a thread group. The kernel 40 saves and manages the class loader and the thread group.

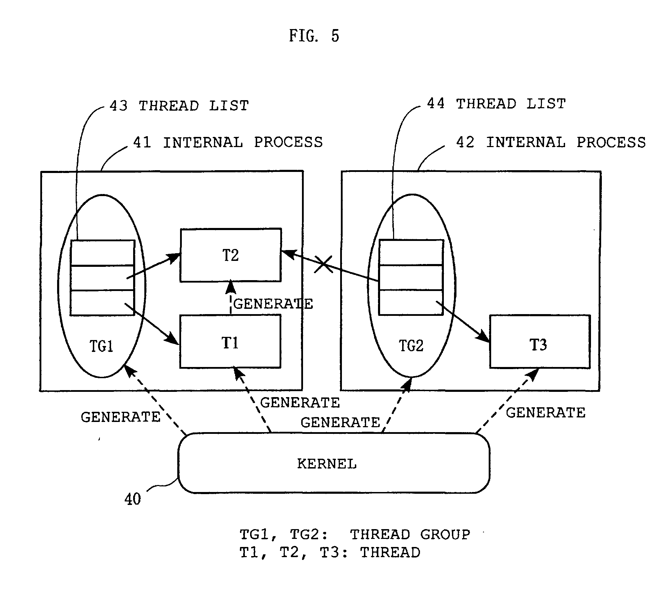

FIG. 5 schematically shows how threads are grouped. Thread groups TG1 and TG2 are generated, respectively, in internal processes 41 and 42 generated by the kernel 40. The thread groups each have a thread list 43 and 44, respectively. Threads are grouped by registering threads T1, T2, and T3, which were directly or indirectly generated by the kernel 40 for the internal processes, with the corresponding thread list 43 or 44. As shown in the internal process 41, a thread (T1) generated by the kernel 40 may generate another thread (T2) . Child thread T2 generated in this manner belongs automatically to the thread group to which its parent thread T1 belongs. Therefore, thread T2 never belongs to a thread group other than TG1. As a result, interference between the internal processes is prevented.

Returning to FIG. 4, the internal-process starting unit 43 of the kernel 40 generates a thread and attaches the generated thread to the thread group. The main method of the loaded class is executed on this thread.

The internal-process discarding unit 44 monitors if all threads belonging to a thread group, provided for each internal process, have been terminated and, upon detecting that all threads have been terminated, discards information stored for managing the internal process (including the class loader and thread group saved during internal-process generation) assuming that the internal process has been terminated.

FIG. 7 shows an example of information management by a process management table 421. Each entry of the process management table 421 is associated with an internal process (Proc) . The thread group (TG) and the class loader (CL) are associated with each internal process.

Instead of management by the process management table such as the one shown in FIG. 7, other management methods such as management by a link list or management by a hash table may also be used.

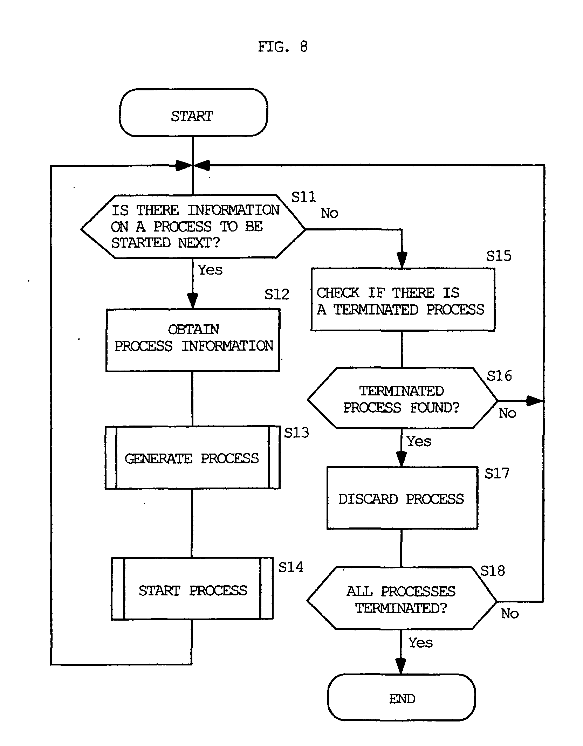

FIG. 8 shows a flowchart showing an example of operation of the kernel 40. In the description of FIG. 8, a "process" refers to an internal process unless otherwise stated.

The kernel first checks if there is information on a process to be started next (S11). If there is, the kernel causes the process information obtaining unit 41 to obtain process information as described above (S12). Then, the kernel causes the internal-process generating unit 42 to generate a process (S13), and causes the internal-process starting unit 43 to start the process (S14). If there is still information on a process to be started, steps S12-S14 are repeated.

If there is no information on a process to be started, the kernel causes the internal-process discarding unit 44 to check if there is a terminated process (S15). If a terminated process is found (Yes in S16), the process is discarded (S17). Control is passed back to step S11 to continue processing until all processes are terminated (S18).

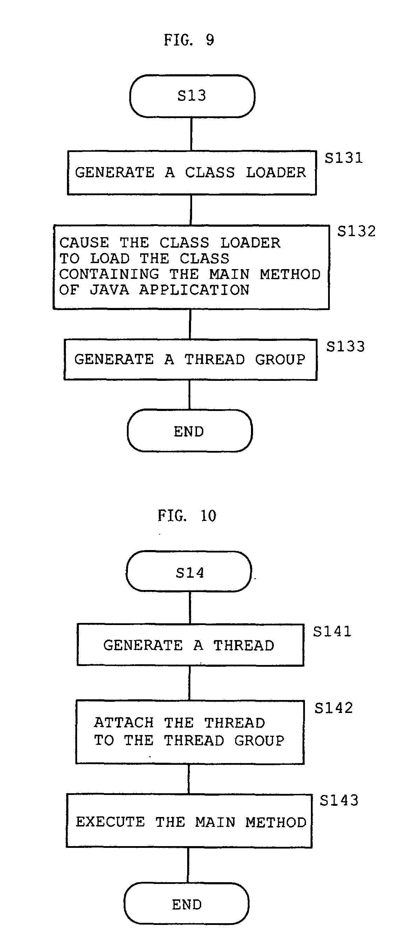

FIG. 9 shows a flowchart showing an example of the actual processing of the process generation step S13 in FIG. 8. In FIG. 9, the kernel first generates a class loader (S131). Next, the kernel causes the class loader to load the class having the main method of the Java application (S132) and generates a thread group (S133).

FIG. 10 shows a flowchart showing an example of the actual processing of the process start step S14. In FIG. 10, the kernel first generates a thread (S141). Next, the kernel attaches this thread to the corresponding thread group (S142) that has been generated and executes the main method using this thread (S143).

In addition to the above-described functions shown in FIG. 4, the kernel 40 may have the following additional functions:
- Function to force an internal process to terminate

This function allows the kernel to force all threads belonging to a process to terminate. This function is conveniently used, for example, when the process enters an endless loop or when the process cannot be started for some reason.
- Function to allow internal processes to share a class or an object

This function allows internal processes, each with a name space separately provided by the kernel (using a class loader), to communicate each other. Class sharing may be achieved, for example, by providing a name space, which may be accessed commonly by the internal processes, in addition to the name space for each internal process and by loading a particular class into this common name space regardless of the internal process. In addition, object sharing may be achieved by allowing the kernel to accept a reference to an object in an internal process and then by passing the reference to some other process to enable a plurality of internal processes to access the same object. This makes it possible, for example, to pass a large amount of data among internal processes via an array object.

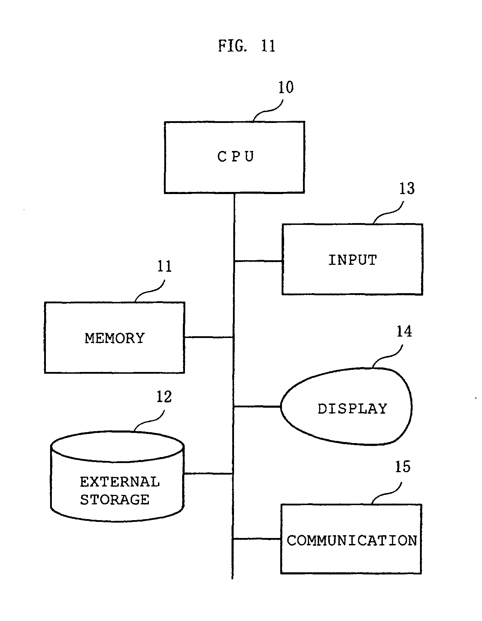

Because the system according to the present invention may operate on any base machine, the configuration of the base machine may be the configuration of a standard computer such as the one shown in FIG. 11. In this example, the CPU 10, the memory 11 (ROM, RAM, etc.), an external storage unit 12 (hard disk unit, etc.), an input unit 13 (keyboard, etc.), a display 14 (CRT, liquid crystal display, etc. ) , and a communication unit 15 are shown. It is also possible to add some other components or to delete some components (for example, external storage unit 12).

While the preferred embodiment of the present invention has been described, it is to be apparent to those skilled in the art that modifications and changes will readily be made without departing from the scope of the present invention described in the claims.

### INDUSTRIAL APPLICABILITY

According to the present invention, a plurality of Java applications may be executed on a single Java virtual machine without having to change the specifications of the Java virtual machine. This makes it possible to reduce the startup processing time of the Java virtual machine and, at the same time, to reduce the overall memory amount. Furthermore, because a plurality of Java virtual machines sometimes cannot be activated in a built-in application, it is also expected that the present invention will enhance convenience when Java is used in a built-in application.

## Claims

1. An information processing method for executing a plurality of Java applications on a single Java virtual machine, said information processing method comprising the steps of:
providing a control module that operates on the Java virtual machine; and
activating the single Java virtual machine when a Java application is to be executed,
wherein, on the activated Java virtual machine, said control module:
obtains information for identifying a Java application to be executed next;
generates an internal process for the application identified by the obtained information; and
starts the generated internal process; and, after that,
said control module generates and starts another internal process for each of the Java applications to be executed.

2. The information processing method according to claim 1, wherein said step of generating an internal process comprises the steps of:
generating a class loader;
loading, with the use of the class loader, a start class containing a main method based on the obtained information; and
generating a thread group.

3. The information processing method according to claim 2, wherein said step of starting the internal process comprises the steps of:
generating a thread;
attaching the generated thread to the thread group; and
executing the main method of the loaded start class on the thread.

4. The information processing method according to claim 3, further comprising the step of discarding the started internal process by said control module.

5. The information processing method according to claim 4, wherein said step of discarding the internal process comprises the steps of:
detecting that, for each internal process, all threads belonging to a thread group have terminated; and
upon detection, discarding management information including the class loader and the thread group of the internal process.

6. An information processing system for executing a plurality of Java applications on a single Java virtual machine, comprising a control module that operates on the Java virtual machine,
wherein said control module comprises:
means for obtaining information for identifying a Java application to be executed;
means for generating an internal process for the application identified by the obtained information; and
means for starting the generated internal process, and
wherein said control module executes processing of each means concerning the internal process for each of the plurality of Java application programs to be executed.

7. A recording medium storing therein a computer program that serves as a control module operating on a Java virtual machine for implementing an information processing method for executing a plurality of Java applications on a single Java virtual machine, said computer program comprising:
a function for obtaining information for identifying a Java application to be executed;
a function for generating an internal process for the application identified by the obtained information; and
a function for starting the generated internal process, and
wherein another internal process is generated and started for each of the plurality of Java applications to be executed.

8. A computer program that serves as a control module operating on a Java virtual machine for implementing an information processing method for executing a plurality of Java applications on a single Java virtual machine, said computer program comprising:
a function for obtaining information for identifying a Java application to be executed;
a function for generating an internal process for the application identified by the obtained information; and
a function for starting the generated internal process,
wherein another internal process is generated and started for each of the plurality of Java applications to be executed.

9. An information processing method wherein a kernel is provided as a control module that functions on a Java virtual machine generated and activated on an operating system (OS), said method comprising the steps of:
when a Java application program is to be executed, giving an execution command of said kernel to the operating system to generate and activate the Java virtual machine;
generating and starting said kernel by said Java virtual machine; and
thereafter, serially obtaining, by said kernel, items of information for identifying Java applications to execute a plurality of Java applications on the single java virtual machine concurrently.
